# FASCICULE DE BREVET EUROPEEN

(11) **EP 0 468 251 B1**
(45) Date de publication et mention de la délivrance du brevet: **01.09.1993**
(21) Numéro de dépôt: 91111184.7
(22) Date de dépôt: 05.07.1991
(51) Int. Cl.: A23L 1/16

(54) **Procédé de préparation de pâtes alimentaires aromatisées**
Verfahren zur Herstellung aromatisierter Teigwaren
Process for preparing flavoured pasta

(30) Priorité: 24.07.1990 CH 2444/90
(43) Date de publication de la demande: 29.01.1992
(73) Titulaire: SOCIETE DES PRODUITS NESTLE S.A., 1800 Vevey (CH)
(72) Inventeur: Hauser, Thomas Wilhelm, CH-8057 Zurich (CH); Lechthaler, Jurg, CH-8051 Zurich (CH)

(56) Documents cités:
- EP-A- 0 084 831
- EP-A- 0 105 100
- EP-A- 0 130 282
- DERWENT FILE SUPPLIER WPIL, 1985, AN=85-058062 [10], Derwent Publications Ltd, Londres, GB; & JP-A-60 012 946 (MARUMI K.K.)
- PATENT ABSTRACTS OF JAPAN, vol. 11, no. 282 (C-446)[2729], 11 septembre 1987; & JP-A-62 79 749 (TAIYO FISHERY) 13-04-1987
- DERWENT FILE SUPPLIER WPIL, 1990, AN=90-214229 [28], Derwent Publications Ltd, Londres, GB; & JP-A-2 145 162 (MARUMI K.K.)
- PATENT ABSTRACTS OF JAPAN, vol. 8, no. 212 (C-244)[1649], 27 septembre 1984; & JP-A-59 98 659 (NONOGAWA SHOJI) 07-06-1984
- PATENT ABSTRACTS OF JAPAN, vol. 9, no. 228 (C-303)[1951], 13 septembre 1985; & JP-A-60 87 746 (HAKUBAKUMAI) 17-05-1985

## Description

La présente invention a trait à un procédé de préparation de pâtes alimentaires aromatisées.

Il est connu, par exemple par le brevet CH 667 185, de préparer des pâtes alimentaires contenant au moins un additif destiné à en modifier la saveur, par incorporation directement dans la masse des épices et/ou condiments souhaités, sous forme de poudre ou de morceaux, puis laminage et séchage jusqu'à 90-95% de matière sèche.
Un autre procédé connu consiste à préparer des pâtes traditionnelles et à imprégner leur surface extérieure avec un agent aromatisant. Une telle méthode présente toutefois l'inconvénient d'une perte importante des arômes dans l'eau lors de la cuisson.

Or, on a constaté que les pâtes aromatisées, contenant environ 2 à 3% d'agent aromatisant, préparées de manière traditionnelle, par pétrissage, laminage et/ou extrusion, sont plus friables, de qualité inférieure et présentent une texture en bouche plus molle que les pâtes traditionnelles non aromatisées.
De plus, les pertes de matière subies durant une cuisson à l'eau bouillante, par exemple, de ces pâtes aromatisées, sont importantes.

La présente invention a pour but de proposer un procédé permettant la préparation, d'une manière simple et rapide, de pâtes alimentaires aromatisées de qualité et de texture comparables à celles de pâtes traditionnelles, et de teneur élevée en agent aromatisant.

Selon le procédé, objet de la présente invention, on prépare un mélange comprenant, en parties en poids,
- 50 à 80: parties d'un produit de mouture de féculent,
- 15 à 25: parties d'amidon,
- 0,4 à 2: parties d'émulsifiant,
- 0,5 à 2: parties d'un agent gélifiant,
- 5 à 20: parties d'une composition aromatisante

et de l'eau adoucie de manière à obtenir un taux de matière sèche de 52-56%,
on forme les pâtes par cuisson-extrusion du mélange, on met en contact les pâtes formées avec une solution aqueuse de calcium et l'on sèche les pâtes.

Le présent procédé permet donc d'obtenir, par cuisson-extrusion, des pâtes aromatisées contenant au moins 3%, et jusqu'à environ 10% en poids, d'agent aromatisant, possédant un goût agréable et une texture non collante.

Pour mettre en oeuvre le présent procédé, on prépare un mélange comprenant un produit de mouture de féculent, un amidon, un émulsifiant, un agent gélifiant et une composition aromatisante.

Le produit de mouture de féculent peut être, par exemple, une farine ou une semoule de blé dur, de blé tendre, de maïs, de riz, de pommes-de-terre ou de toute autre matière première riche en amidon.
L'amidon peut être, de préférence, de l'amidon de maïs ou de pommes-de-terre.
L'agent gélifiant peut être, par exemple, un alginate notamment l'alginate de sodium.
L'émulsifiant peut être, par exemple, un monoglycéride, un diglycéride, un triglycéride ou un de leurs dérivés, ou un mélange de ces composés.
Une composition aromatisante utilisable pour la mise en oeuvre du présent procédé peut comprendre, en parties en poids,
- 3-8: parties d'au moins un agent aromatisant,
- 2-4: parties d'exhausteur de saveur, notamment de glutamate de sodium,
- 0-4: parties de sauce soja fermentée et
- 0-4: parties de saccharose

L'agent aromatisant entrant dans une telle composition peut être notamment l'ail, l'oignon, le gingembre, le coriandre, le poivre, le cumin, la cardamome ou toute autre substance aromatisante, d'origine naturelle ou synthétique telle qu'une poudre de fromage ou de légumes.
Le présent mélange est réalisé en présence d'eau adoucie, de manière à obtenir un taux de matière sèche de 52-56% en poids.
Il est important de préparer le mélange avec de l'eau adoucie. En effet, on a constaté que lorsque l'on prépare le mélange avec de l'eau dure, la pâte extrudée perd de sa cohésion et se désagrège.
Par eau adoucie, on entend une eau dont la concentration en ion calcium est inférieure à 2.10⁻⁴ M.

On peut ensuite former les pâtes par cuisson-extrusion, par exemple dans une extrudeuse à double vis, sous une pression de 20-100 bar, de préférence 30-50 bar et à une température de 60-105°C environ.
L'étape de cuisson-extrusion peut durer, par exemple, de 30 à 80 secondes environ.

On peut ensuite mettre rapidement en contact les pâtes avec une solution aqueuse de calcium, par exemple en les arrosant avec un jet de cette solution lorsqu'elles débouchent de la filière d'extrusion, ou en les plongeant un instant dans un bain de cette solution.
Il se forme alors, au sein de la pâte, un réseau complexe entre l'agent gélifiant et le calcium, un réseau d'alginate de calcium par exemple, qui renforce la cohésion des pâtes et assure leur stabilité lors de la cuisson ultérieure.
De préférence, on fait passer en continu les pâtes extrudées dans une solution aqueuse de chlorure de calcium à 13-30 gl⁻¹, à une température de 20-70°C et pendant 2 à 10 secondes.

On peut alors sécher les pâtes, par exemple dans un séchoir à air chaud, à une température modérée de l'ordre de 60-70°C et sous une humidité relative pouvant varier de 35 à 60%.
Puis, afin d'éviter l'apparition éventuelle de craquelures dans les pâtes, on peut les refroidir brusquement à la fin du séchage, par exemple avec un courant d'air froid à 30-38°C et sous une humidité relative de 90-95%. On obtient ainsi des pâtes aromatisées présentant un taux de matière sèche compris entre 87 et 95% en poids.

Les pâtes séchées peuvent être conservées,éventuellement avec une garniture de légumes,sous forme séchée lorsqu'elles présentent une activité de l'eau de environ 0,15-0,20, ou sous forme congelée à une température de -15 à -30°C.

Elles peuvent aussi être conservées avec un taux de matière sèche de 91-92°C et une activité de l'eau de environ 0,50-0,55.

Les exemples ci-après illustrent la présente invention.

### Exemple 1

On prépare tout d'abord une composition aromatisante comprenant 3,4 kg d'un mélange de poudres d'ail, d'oignon, de gingembre, de coriandre, de poivre, de curcuma, de cardamome et de cumin, 2,7 kg de glutamate de sodium, 2,0 kg de sauce soja fermentée en poudre et 1,9 kg de saccharose.

On prépare ensuite un mélange comprenant 75,5 kg d'une semoule de blé tendre, 16,9 kg d'amidon de maïs, 1,0 kg d'émulsifiant, 0,7 kg d'alginate de sodium, 5,8 kg de la composition aromatisante et de l'eau adoucie, de manière à obtenir un mélange présentant une teneur en matière sèche de environ 54% en poids.

On réalise ce mélange dans la première partie d'une extrudeuse à double vis rotative tournant à 180 tours/minute, sous une pression de 25 bar, ladite extrudeuse présentant successivement différentes zones entourées de manteaux indépendants dans lesquels peuvent circuler des fluides à différentes températures.
Dans le cas présent, l'extrudeuse présente six zones successives dans lesquelles les opérations de mélange, pétrissage, extrusion et cuisson se succèdent sans interruption.

Ainsi, le mélange est réalisé dans une première zone de l'extrudeuse, puis la pâte obtenue est malaxée et soumise à des effets de cisaillement dans les trois zones suivantes dans lesquelles on maintient une température de respectivement 63-65°C, 72-74°C et 90-92°C à l'aide d'une circulation de fluides aux températures adéquates, de manière que la pâte soit à une température constante de 102-105°C.
Dans les deux dernières zones, on maintient une température de 92-95°C et la pâte cuite sort de l'extrudeuse à travers une filière d'extrusion constituée d'une plaque d'acier épais percée d'une multitude de trous de environ 0,6 mm de diamètre.
Le passage de la pâte dans l'extrudeuse dure environ 45-55 secondes.
Les pâtes sont alors immédiatement plongées dans une solution aqueuse de chlorure de calcium à 18 gl ⁻¹, pendant environ 4 à 6 secondes.
Puis elles sont découpées en longs tronçons et disposées en pelotes.
Les pâtes sont ensuite séchées dans un séchoir à air chaud pendant 1 h à une température de 60°C sous une humidité relative de 55-60%, puis 30 minutes à une température de 70°C sous une humidité relative de 38-45%, et enfin refroidies dans un courant d'air froid à 35°C et 90-95% d'humidité relative.

On obtient ainsi des pâtes aromatisées séchées présentant un taux de matière sèche de 94-95% et une activité de l'eau de 0,15-0,20.

Ces pâtes peuvent être préparées pour la consommation par cuisson pendant 4 à 5 minutes dans de l'eau bouillante salée, à raison de 100 g de pâtes pour 1 litre d'eau. On obtient des pâtes d'un goût agréable et de texture non collante.

### Exemple 2

Il est possible d'incorporer les pâtes aromatisées séchées préparées selon l'exemple 1 à un mets complet se présentant sous forme déshydratée.
On peut, par exemple préparer un mets comprenant 100 g de pâtes aromatisées et 100 g de légumes séchés variés, tels que des petits pois, des haricots, des poireaux et des champignons.
Ce mets séché peut être disposé dans un sachet perforé de dimension adéquate, constitué d'une feuille en matière plastique résistant à la chaleur, par exemple une feuille de 0,03-0,05 mm d'épaisseur, présentant une multitude de perforations, pour permettre le contact avec l'eau de cuisson.
Lors de la préparation pour la consommation, on peut alors placer le sachet contenant le mets complet soit dans de l'eau salée bouillante, pendant 3 à 6 minutes, soit dans de l'eau salée froide et le disposer dans un four microondes pendant 3 à 6 minutes. On obtient un mets complet, de texture non collante, prêt à la consommation.

### Exemple 3

On prépare, de la même manière qu'à l'exemple 1, des pâtes aromatisées présentant un taux de matière sèche de 91,5-92% et une activité de l'eau de 0,50-0,54.

Les pâtes sont réparties en plusieurs lots qui sont conservés pendant un certain temps à une certaine température.
Après conservation, les pâtes sont cuites pendant 5 minutes dans de l'eau bouillante puis comparées.
On obtient les résultats suivants:
Après 3 mois de conservation:
- les pâtes conservées à 4°C, 20°C ou 30°C présentent une couleur, une odeur, un goût, une consistance et une apparence agréables et semblables à ceux des pâtes témoins n'ayant pas subi de conservation,
- les pâtes conservées à 37°C ont un goût légèrement moins agréable que les pâtes témoins, les autres caractéristiques étant semblables à celles des témoins.

Après 6 mois de conservation:
- les pâtes conservées à 4°C ou à 20°C présentent des caractéristiques semblables à celles des pâtes témoins,
- les pâtes conservées à 30°C ont un goût légèrement moins agréable que les pâtes témoins, les autres caractéristiques étant semblables à celles des témoins,
- les pâtes conservées à 37°C ont une odeur légèrement moins agréable et un goût moins agréable que les pâtes témoins, les autres caractéristiques étant semblables à celles des témoins.

Après 9 mois de conservation:
- les pâtes conservées à 4°C ou à 20°C présentent des caractéristiques semblables à celles des pâtes témoins,
- les pâtes conservées à 30°C ont une odeur et un goût légèrement moins agréables que les pâtes témoins, les autres caractéristiques étant semblables à celles des témoins,
- les pâtes conservées à 37°C ont une odeur et un goût moins agréables que les pâtes témoins, les autres caractéristiques étant semblables à celles des témoins.

Les pâtes aromatisées préparées selon la présente invention peuvent donc être conservées pendant au moins 3 mois à température ambiante et pendant au moins 9 mois sous forme réfrigérée sans altération de leurs qualités organoleptiques.

## Revendications

1. Procédé de préparation de pâtes alimentaires aromatisées dans lequel
- on prépare un mélange comprenant, en parties en poids,
50 à 80 parties d'un produit de mouture de féculent,
15 à 25 parties d'amidon,
0,4 à 2 parties d'émulsifiant,
0,5 à 2 parties d'un agent gélifiant,
5 à 20 parties d'une composition aromatisante
et de l'eau adoucie (une eau dont la concentration en ion calcium est inférieure à 2.10⁻⁴µ) de manière à obtenir un taux de matière sèche de 52-56%,
- on forme les pâtes par cuisson-extrusion du mélange,
- on met en contact les pâtes formées avec une solution aqueuse de calcium, et
- l'on sèche les pâtes.

2. Procédé selon la revendication 1, caractérisé par le fait que l'agent gélifiant est l'alginate de sodium.

3. Procédé selon la revendication 1, caractérisé par le fait que la cuisson-extrusion est effectuée sous une pression de 20-100 bar et à une température de 60-105°C.

4. Procédé selon la revendication 1, caractérisé par le fait que la solution aqueuse de calcium est une solution de chlorure de calcium à 10-30 gl⁻¹, et qu'elle présente une température de 20-70°C.

5. Procédé selon la revendication 1, caractérisé par le fait que l'on sèche les pâtes jusqu'à un taux de matière sèche de 93-95% en poids.

## Patentansprüche

1. Verfahren zur Herstellung von aromatisierten Teigwaren, bei welchem
- ein Gemisch hergestellt wird, das in Gewichtsteilen besteht aus
50 bis 80 Teilen stärkehaltiges Mahlgut,
15 bis 25 Teilen Stärke,
0,4 bis 2 Teilen Emulgator,
0,5 bis 2 Teilen Geliermittel,
5 bis 20 Teilen einer aromatisierenden Zusammensetzung und weichem Wasser (ein Wasser, dessen Calciumionenkonzentration unter 2.10⁻⁴M liegt), so daß man einen Trockensubstanzgehalt von 52-56% erhält,
- die Teigwaren durch Kochextrusion des Gemisches geformt werden,
- die geformten Teigwaren mit einer wäßrigen Calciumlösung in Kontakt gebracht werden und
- die Teigwaren getrocknet werden.

2. Verfahren nach Anspruch 1, **dadurch gekennzeichnet,** daß das Geliermittel Natriumalginat ist.

3. Verfahren nach Anspruch 1, **dadurch gekennzeichnet,** daß die Kochextrusion unter einem Druck von 20-100 b und einer Temperatur von 60-105°C durchgeführt wird.

4. Verfahren nach Anspruch 1, **dadurch gekennzeichnet,** daß die wäßrige Calciumlösung eine Calciumchloridlösung von 10-30 gl⁻¹ ist und daß sie eine Temperatur von 20-70°C hat.

5. Verfahren nach Anspruch 1, **dadurch gekennzeichnet,** daß die Teigwaren bis zu einem Trockensubstanzgehalt von 93-95 Gew.-% getrocknet werden.

## Claims

1. A process for the production of flavoured pastas, characterized in that it comprises the steps of
- preparing a mixture containing
50 to 80 parts by weight of a ground starchy product,
15 to 25 parts by weight starch,
0.4 to 2 parts by weight emulsifier,
0.5 to 2 parts by weight of a gelling agent,
5 to 20 parts by weight of a flavouring composition, and softened water (a water in which the concentration of calcium ions is below 2·10⁻⁴ M) to give a dry matter content of 52 to 56%,
- shaping the pastas by extrusion cooking of the mixture,
- contacting the shaped pastas with an aqueous calcium solution and
- drying the pastas.

2. A process as claimed in claim 1, characterized in that the gelling agent is sodium alginate.

3. A process as claimed in claim 1, characterized in that the extrusion cooking step is carried out under a pressure of 20 to 100 bar and at a temperature of 60 to 105°C.

4. A process as claimed in claim 1, characterized in that the aqueous calcium solution is a calcium chloride solution having a concentration of 10 to 30 gl⁻¹ and has a temperature of 20 to 70°C.

5. A process as claimed in claim 1, characterized in that the pastas are dried to a dry matter content of 93 to 95% by weight.
